**Europäisches Patentamt**

**European Patent Office**

**Office européen des brevets**

(19)

(11) Veröffentlichungsnummer: **0 031 096**
**B1**

(12) # EUROPÄISCHE PATENTSCHRIFT

(45) Veröffentlichungstag der Patentschrift:
**21.09.83**

(51) Int. Cl.³: **G 08 B 17/10**

(21) Anmeldenummer: **80107833.8**

(22) Anmeldetag: **11.12.80**

(54) Optische Anordnung für einen Rauchmelder nach dem Lichtstreuungsprinzip.

(30) Priorität: **20.12.79 DE 2951459**

(43) Veröffentlichungstag der Anmeldung:
**01.07.81 Patentblatt 81/26**

(45) Bekanntmachung des Hinweises auf die Patenterteilung:
**21.09.83 Patentblatt 83/38**

(84) Benannte Vertragsstaaten:
**AT BE CH FR GB IT LI LU NL SE**

(56) Entgegenhaltungen:
**CH-A-417 405**
**S-A-4 103 997**

(73) Patentinhaber: **Heimann GMBH, Weher Köppel 6,**
**D-6200 Wiesbaden 1 (DE)**

(72) Erfinder: **Herwig, Thomas, Dipl.-Phys., Nelkenstrasse 7,**
**D-6229 Schlangenbad 3 (DE)**
Erfinder: **Struss, Ortwin, Hunsrückstrasse 10,**
**D-6200 Wiesbaden-Nordenstadt (DE)**

(74) Vertreter: **Mehl, Ernst, Dipl.-Ing., Postfach 22 01 76,**
**D-8000 München 22 (DE)**

ACTORUM AG

## Optische Anordnung für einen Rauchmelder nach dem Lichtstreuungsprinzip

Die Erfindung betrifft eine optische Anordnung für einen Rauchmelder nach dem Lichtstreuungsprinzip mit den Merkmalen:

a) ein optischer Sender ist auf einen Testraum gerichtet;

b) ein optischer Empfänger ist im spitzen Winkel $\beta$ zum Sender so auf den Testraum gerichtet, dass er die von den im Testraum befindlichen Partikeln gestreute Rückwärtsstrahlung empfängt;

c) bei der Strahlungsführung für Sender und Empfänger werden optische Blenden verwendet.

Eine solche optische Anordnung ist bekannt und beispielsweise in der DE-OS 2 630 843 beschrieben. Das Prinzip des Rauchmelders beruht auf der Streuung elektromagnetischer Strahlung an Rauchpartikeln, die sich in einem Testraum befinden. Vorteilhaft für ein gleichmässiges Erfassen von grossen und kleinen Rauchpartikeln ist die reine Verwendung der Rückwärtsstreuung, d.h. die in einem spitzen Winkel $\beta$ zum optischen Sender an den Partikeln gestreute Rückwärtsstrahlung.

Die bekannte Anordnung hat jedoch den Nachteil, dass die Baulänge im Verhältnis zum ausgenutzten Abstrahl- bzw. Empfangswinkel gross ist. Dies ist damit zu erklären, dass die Strahlführung ausschliesslich durch Blenden erreicht wird. Bei der Rückwärtsstreuung entsteht eine krawattenförmige Überlappungszone von Sender- und Empfängerstrahlengang, die die minimal erforderliche Baulänge der Anordnung nach folgender Beziehung

$$h = \frac{b}{2} \cot \left( \frac{\beta - \alpha}{2} \right)$$

bestimmt. Dabei bedeutet: h die Baulänge, b die Entfernung des Senders vom Empfänger, $\beta$ den Winkel zwischen den optischen Achsen von Sender und Empfänger und $\alpha$ den Abstrahlöffnungswinkel und den Empfangsöffnungswinkel. Aus dieser Beziehung ist ersichtlich, dass bei kleinem Winkel $\beta$ ($\beta$ soll möglichst klein sein) und grossem Winkel $\alpha$ ($\alpha$ soll möglichst gross sein, damit die Überlappungszone möglichst gross wird, d.h. ein ausreichend grosser Testraum ermöglicht wird) die Baulänge h gross ist. Um eine geringe Baulänge zu erreichen müsste man deshalb bei vorgegebenem Winkel $\beta$ den Winkel $\alpha$ reduzieren.

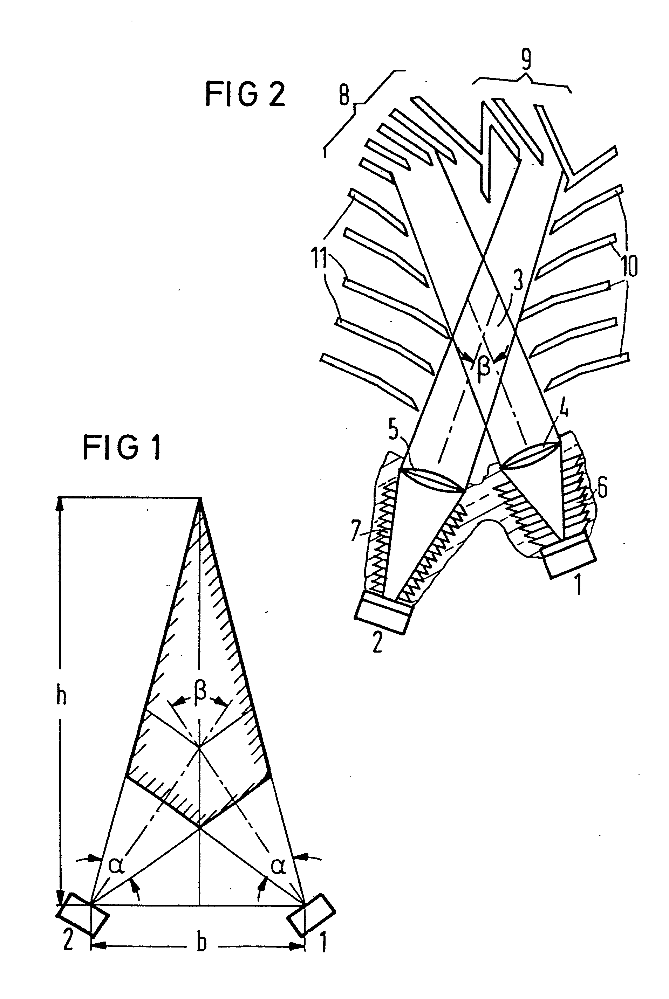

An der Fig. 1 der Zeichnung soll dies verdeutlicht werden. Ein optischer Sender 1 besitzt einen Abstrahlöffnungswinkel $\alpha$, ein Empfänger 2 besitzt den Empfangsöffnungswinkel $\alpha$ in derselben Grösse. Sender 1 und Empfänger 2 haben voneinander den Abstand b. Ihre optischen Achsen stehen zueinander im Winkel $\beta$. Ihre Abstrahl- bzw. Empfangsflächen überlappen sich in einem krawattenförmigen Bereich, der in der Fig. 1 gestrichelt dargestellt ist. Dieser Bereich ist die Schnittfläche des Testraums, in dem sich die nachzuweisenden Rauchpartikel befinden. Die vom Sender 1 und Empfänger 2 abgewandte Spitze des Überlappungsbereichs ergibt die notwendige Baulänge h.

Der vorliegenden Erfindung liegt die Aufgabe zugrunde, eine optische Anordnung für einen Rauchmelder nach dem Lichtstreuungsprinzip anzugeben, bei dem unter Beibehalten eines kleinen Winkels $\beta$ für die Auswertung der Rückwärtsstrahlung die Baulänge der gesamten Anordnung gering bleibt.

Zur Lösung dieser Aufgabe werden bei einer optischen Anordnung der eingangs genannten Art erfindungsgemäss folgende Merkmale vorgeschlagen:

d) vor dem Sender und Empfänger befindet sich jeweils eine optische Linse, die die auf den Testraum gerichtete Strahlung zumindest angenähert parallel richtet bzw. die gestreute, zumindest angenähert parallele Rückwärtsstrahlung auf den Empfänger fokussiert;

e) vor den Linsen im Bereich der Supplementwinkel zu $\beta$ begrenzen Blenden die Strahlengänge von Sender und Empfänger;

f) vom Sender und Empfänger gesehen jenseits des Testraums befindet sich jeweils ein Lichtsumpf.

Bei einer erfindungsgemässen Anordnung ist trotz der Wahl des Winkels $\alpha \approx 0°$ durch die Verwendung fokussierender Elemente gewährleistet, dass grosse Raumwinkel sender- und empfängerseitig ausgenutzt werden können. Dadurch wird eine hohe Intensität erreicht. Die Blenden haben dabei ausschliesslich die Aufgabe, die Strahlen von unerwünschten Streu- und Reflexionseffekten abzufangen. Vorteilhaft ist, wenn die Blenden in einem spitzen Winkel zur gemeinsamen optischen Achse von Sender und Empfänger gegen diese gerichtet stehen. Wenn darüber hinaus die Blenden jeweils zu einem grösseren Winkel geknickt sind, werden auf der einen Seite Rückstreuungen in den Strahlengang vermieden und auf der anderen Seite eine grössere mechanische Festigkeit der Blenden erreicht.

Nach einer weiteren vorteilhaften Ausgestaltung einer erfindungsgemässen Anordnung ist der Strahlenkegel jeweils zwischen dem Sender bzw. Empfänger und der davorliegenden Linse von einer Rillenanordnung umgeben, die als Lichtsumpf für Strahlung anderer Richtung dient als sie im Strahlenkegel der parallelen Strahlung des Testraums entspricht. Damit wird verhindert, dass die in den Linsen durch Mehrfachreflexion entstehenden nicht-parallelen Strahlen in den Testraum gelangen bzw. an den Empfänger gelangen.

Ausser der in der Fig. 1 dargestellten prinzipiellen bekannten Anordnung enthält die Zeichnung in der Fig. 2 die Darstellung eines Ausführungsbeispiels einer erfindungsgemässen optischen Anordnung.

Die Fig. 2 zeigt ein Schnittbild durch einen erfindungsgemässen optischen Rauchmelder in der Ebene eines optischen Senders 1 und eines optischen Empfängers 2. Der optische Sender 1 richtet elektromagnetische Strahlung auf einen Testraum 3, in dem sich die nachzuweisenden Rauchpartikel befinden können. Die Blickrichtung des Senders 2 ist ebenfalls auf diesen Testraum 3 gerichtet. Sender 1 und Empfänger 2 stehen zueinander in einem spitzen Winkel $\beta$. Vor dem Sender 1 liegt eine optische Linse 4, vor dem Empfänger 2 eine optische Linse 5. Jeweils dazwischen ist eine optische Rillenanordnung 6 bzw. 7 angeordnet. Diese Rillenanordnung 6 und 7 umgeben den Strahlengang zwischen dem Sender 1 und der Linse 4 bzw. zwischen der Linse 5 und dem Empfänger 2 und dienen mit einem Belag von lichtabsorbierendem Material als Lichtsumpf. Die nicht mehrfach reflektierten oder gestreuten Strahlen des Senders 1 treten näherungsweise parallel aus der Linse 4 in den Testraum 3 und gelangen, sofern sie nicht durch Partikelstreuung abgelenkt werden, in einen Lichtsumpf 8, wo sie absorbiert werden. Die im Testraum 3 an den Partikeln gestreute Rückwärtsstrahlung gelangt annähernd parallel über die Linse 5 in dem Empfänger 2. Die in die entgegengesetzte Richtung gestreute Strahlung gelangt in einen Lichtsumpf 9, wo sie absorbiert wird. Die Lichtsümpfe 8 und 9 bestehen aus jeweils vier Blenden. Im Bereich der Supplementwinkel zu beiden Seiten des Winkels $\beta$ begrenzen jeweils fünf Blenden die Strahlengänge zwischen Sender 1 und Lichtsumpf 8 bzw. Empfänger 2 und Lichtsumpf 9. Sie sind auf der einen Seite der innerhalb des Winkels $\beta$ liegenden gemeinsamen optischen Achse mit 10 und auf der anderen Seite mit 11 bezeichnet. Sämtliche Blenden 10 und 11 stehen in einem spitzen Winkel zur gemeinsamen optischen Achse von Sender 1 und Empfänger 2 gegen sie gerichtet und sind jeweils in sich von der dieser Achse weg geknickt. Die Blenden 10 und 11 begrenzen lediglich die Strahlengänge und beschneiden sie nicht. Sie haben ausschliesslich die Aufgabe, Strahlen von Streu- und Reflexionseffekten abzufangen. Der spitze Winkel zur gemeinsamen optischen Achse ist günstig für ein Ausblenden von auftreffender Strahlung aus dem Testraum 3.

Die parallele Strahlenführung einer erfindungsgemässen optischen Anordnung hat ausser dem Vorteil, dass die Baulänge des Rauchmelders gering gehalten werden kann, den Vorteil, dass auch die die Bauhöhe senkrecht zu der in der Fig. 2 dargestellten Schnittebene gering sein kann. Blenden oberhalb und unterhalb der Strahlengänge, die in der Fig. 2 dargestellt sind, sind nicht erforderlich.

## Patentansprüche

1. Optische Anordnung für einen Rauchmelder nach dem Lichtstreuungsprinzip mit den Merkmalen:

a) ein optischer Sender (1) ist auf einen Testraum (3) gerichtet;

b) ein optischer Empfänger (2) ist im spitzen Winkel $\beta$ zum Sender so auf den Testraum gerichtet, dass er die von den im Testraum (3) befindlichen Partikeln gestreute Rückwärtsstrahlung empfängt;

c) bei der Strahlungsführung für Sender (1) und Empfänger (2) werden optische Blenden (10, 11) verwendet;

gekennzeichnet durch folgende Merkmale:

d) vor dem Sender (1) und Empfänger (2) befindet sich jeweils eine optische Linse (4 bzw. 5), die die auf den Testraum (3) gerichtete Strahlung zumindest angenähert parallel richtet bzw. die gestreute, zumindest angenähert paralele Rückwärtsstrahlung auf den Empfänger (2) fokussiert;

e) vor den Linsen (4, 5) im Bereich der Supplementwinkel zu $\beta$ begrenzen Blenden (10, 11) die Strahlengänge von Sender (1) und Empfänger (2);

f) vom Sender (1) und Empfänger (2) gesehen jenseits des Testraums (3) befindet sich jeweils ein Lichtsumpf (8 bzw. 9).

2. Optische Anordnung nach Anspruch 1, dadurch gekennzeichnet, dass die Blenden (10, 11) in einem spitzen Winkel zur gemeinsamen optischen Achse von Sender (1) und Empfänger (2) gegen diese gerichtet stehen.

3. Optische Anordnung nach Anspruch 2, dadurch gekennzeichnet, dass die Blenden (10, 11) jeweils zu einem grösseren Winkel geknickt sind.

4. Optische Anordnung nach einem der Ansprüche 1 bis 3, dadurch gekennzeichnet, dass der Strahlenkegel jeweils zwischen dem Sender (1) bzw. Empfänger (2) und der davorliegenden Linse (4 bzw. 5) von einer Rillenanordnung (6 bzw. 7) umgeben ist, die als Lichtsumpf für Strahlung anderer Richtung dient als sie im Strahlenkegel der parallelen Strahlung des Testraums (3) entspricht.

## Claims

1. An optical arrangement for a smoke alarm using the light scatter principle having the features:

a) an optical transmitter (1) directed to a test space (3);

b) an optical receiver (2) directed to the test space at an acute angle $\beta$ relative to the transmitter in such manner that it receives the back-scattered radiation from particles present in the test space (3);

c) optical diaphragms (10, 11) used for beam control in the transmitter (1) and receiver (2);

characterised by the following features:

d) in front of the transmitter (1) and receiver (2), there are arranged respective optical lenses (4 and 5) which direct radiation to the test space (3) so as to be at least approximately parallel or focusses the back-scattered radiation being at least approximately parallel to the receiver (2), as the case may be;

e) in front of the lenses (4, 5), in the region of the angle supplementary to $\beta$, diaphragms (10, 11) delimit the path of beams of the transmitter (1) and receiver (2);

f) viewed from the transmitter (1) and receiver (2) there is arranged beyond the test space (3) a light trap (8 and 9) in each case.

2. An optical arrangement as claimed in Claim 1, characterised in that the diaphragms (10, 11) are directed towards the transmitter and receiver at an acute angle to the common optical axis of transmitter (1) and receiver (2).

3. An optical arrangement as claimed in Claim 2, characterised in that the diaphragms (10, 11) are respectively bent to form a larger angle.

4. An optical arrangement as claimed in one of Claims 1 to 3, characterised in that the conical beam is surrounded by a groove arrangement (6 and 7) between the transmitter (1) or receiver (2), as the case may be, and the lens (4 or 5) arranged in front thereof, which groove arrangement serves as a light trap for radiation of a direction different to the parallel radiation of the test space (3) in the conical beam.

## Revendications

1. Agencement optique pour un détecteur de fumée fonctionnant suivant le principe de diffussion de la lumière, qui présente les caractéristiques suivantes:

a) un émetteur optique (1) est dirigé vers un espace de contrôle (3);

b) un récepteur optique (2) est dirigé vers l'espace de contrôle, en formant un angle aigu $\beta$ par rapport à l'émetteur, de manière à recevoir le rayonnement de retour diffusé par les particules se trouvant dans l'espace de contrôle (3);

c) des diaphragmes optiques (10, 11) sont utilisés lors du guidage du rayonnement pour l'émetteur (1) et le récepteur (2),
caractérisé par les mesures suivantes:

d) devant l'émetteur (1) et le récepteur (2) se trouve respectivement une lentille optique (4 ou 5) qui dirige le rayonnement envoyé vers l'espace de contrôle (3) au moins approximativement parallèlement ou concentre le rayonnement diffusé, au moins approximativement parallèle, sur le récepteur (2);

e) devant les lentilles (4, 5), dans la région de l'angle supplémentaire à $\beta$, des diaphragmes (10, 11) limitent les trajets des rayons par rapport à l'émetteur (1) et au récepteur (2);

f) vu à partir du récepteur (1) et de l'émetteur (2), de chaque côté de l'espace de contrôle (3), se trouve respectivement un piège de lumière (8 ou 9).

2. Agencement optique suivant la revendication 1, caractérisé par le fait que les diaphragmes (10, 11) sont dirigés par rapport à l'émetteur (1) et au récepteur (2) de manière à former un angle aigu par rapport à l'axe optique commun de ceux-ci.

3. Agencement optique suivant la revendication 2, caractérisé par le fait que les diaphragmes (10, 11) sont respectivement coudés pour former un angle plus important.

4. Agencement optique suivant l'une des revendications 1 à 3, caractérisé par le fait que le cône lumineux est entouré, respectivement entre l'émetteur (1) ou le récepteur (2) et la lentille (4 ou 5) qui se trouve devant, par un agencement de rainures (6 ou 7) qui sert de piège pour le rayonnement possédant une direction autre que celle qui correspond au rayonnement parallèle de l'espace de contrôle (3) dans le cône lumineux.

FIG 2

FIG 1